# EUROPÄISCHE PATENTSCHRIFT

(11) **EP 2 148 417 B1**
(45) Veröffentlichungstag und Bekanntmachung des Hinweises auf die Patenterteilung: **10.01.2018**
(21) Anmeldenummer: 08013141.0
(22) Anmeldetag: 22.07.2008
(51) Int. Cl.: H02M 1/00, H02M 1/32, H02M 7/44, H02J 3/38

(54) **Wechselrichterschaltungsanordnung für einen Photovoltaikgenerator mit mehreren eingangs seriell geschalteten Stromrichtern**
Inverter apparatus for a photovoltaic generator with a plurality of inverters being serially coupled at their input side
Dispositif onduleur pour un générateur photovoltaique avec plusieurs ondulateurs couplé en serie à leur entrée

(43) Veröffentlichungstag der Anmeldung: 27.01.2010
(73) Patentinhaber: SMA Solar Technology AG, 34266 Niestetal (DE)
(72) Erfinder: Falk, Andreas, 34131 Kassel (DE)
(74) Vertreter: Lahnor, Peter

(56) Entgegenhaltungen:
- EP-A- 1 870 996
- EP-A- 1 921 738
- US-A1- 2005 284 673
- CALAIS M ET AL: "Multilevel converters for single-phase grid connected photovoltaic systems: an overview" SOLAR ENERGY, PERGAMON PRESS. OXFORD, GB, Bd. 66, Nr. 5, 1. August 1999 (1999-08-01), Seiten 325-335, XP004362671 ISSN: 0038-092X

## Beschreibung

Die Erfindung betrifft eine Stromrichterschaltungsanordnung gemäß Anspruch 1 und je ein Verfahren zur Anlauf- bzw.

Fehlersteuerung gemäß der Ansprüche 12 und 13 für eine Stromrichterschaltungsanordnung. Bevorzugte Ausführungsformen sind in den abhängigen Ansprüchen definiert. Eine Anordnung der eingangs genannten Art wird beispielsweise in der DE 101 14 075 B4 erläutert. Durch Überbrückungsschalter können einzelne Stromrichter überbrückt werden, so dass bei geringer Eingangsspannung beim Anlauf einer Windkraftanlage bzw. eines Windgenerators eine geringere Anzahl in Reihe geschalteter Stromrichter wirksam ist. Diese Schaltung ist nicht ohne Weiteres für Photovoltaikgeneratoren geeignet, da beim Anlauf anstatt einer zu geringen Spannung eine relativ hohe Leerlaufspannung ansteht.

Außerdem sind Hochsetzsteller in der Photovoltaiktechnik bekannt, um Eingangsspannungen anzupassen. Diese haben den Nachteil, dass eine im Strompfad angeschlossene Diode auch im deaktivierten Hochsteller-Zustand Verluste verursacht.

Aus der Bahntechnik bzw. der US 2005/284673 A1 ist eine Stromrichterschaltungsanordnung für die Umwandlung einer Gleichspannung von 1500V in eine Wechselspannung bekannt. Hierzu werden mehreren in Reihe geschaltete Stromrichter mit je einem steuerbaren Überbrückungsschalter für jeden Stromrichter eingesetzt. Jeder Überbrückungsschalter liegt in einem Gleichspannungszwischenkreis, wobei dieser den jeweiligen Stromrichter in geschlossenem Zustand überbrückt.

Bei Windenergieanlagen, wie sie in der EP 1 921 738 A2 beschrieben sind, liegt parallel zu einer Vollbrückenschaltung eines Wechselrichters und einem Kondensator im Gleichspannungszwischenkreis ein Widerstandschopper. Durch Zuschalten des Choppers kann die Gleichspannung angepasst werden.

Die Veröffentlichung CALAIS M ET AL, "Multilevel converters for singlephase grid connected photovoltaic systems: an overview", SOLAR ENERGY, PERGAMON PRESS. OXFORD, GB, Bd. 66, Nr. 5, 1.Aug 1999, Seiten 325 - 335, XP 004362671, ISSN 0038-092X" beschreibt eine Photovoltaikanlage mit mehreren Strings. Jedem String ist ein Wechselrichter bzw. eine Brückenschaltung und ein Kondensator zugeordnet.

Um bei einer Photovoltaikanlage einen hohen Wirkungsgrad und eine galvanische Trennung zu ermöglichen, wird gemäß der EP 1 870 996 A1 ein Widerstandschopper, der an einem Gleichspannungszwischenkreis geschaltet ist, mit Schaltelementen zum Schalten von Transformatorabgriffen kombiniert.

Der Erfindung liegt die Aufgabe zugrunde, eine Stromrichterschaltungsanordnung der genannten Art derart zu verbessern, dass sie für Photovoltaikgeneratoren geeignet ist und einen hohen Wirkungsgrad aufweist.

Diese Aufgabe wird durch eine Anordnung mit den kennzeichnenden Merkmalen des Anspruches 1 in Verbindung mit seinen Oberbegriffsmerkmalen gelöst.

Die Erfindung beruht auf dem Gedanken, anstelle eines Hochsetzstellers einen Widerstands-Chopper einzusetzen. Zwar wird während des Chopperbetriebs ein Teil der Energie im Chopper als Wärmeenergie umgewandelt, so dass im Chopperbetrieb Verluste entstehen. Dieser Zustand ist aber verhältnismäßig kurz, so dass dieser in Kauf genommen werden kann. Durch die Chopper können aber andererseits Hochsetzsteller und damit eine Diode im Strompfad eingespart werden.

Ein weiterer Vorteil ist, dass die Anlage einen Sinusfilter beinhalten kann und ein Mittelspannungstrafo, der dabei mit hohen du/dt-Werten beim Schalten des Stromrichters nicht belastet wird.

Die beschriebene Anordnung hat einen weiteren Vorteil, und zwar kann im Falle eines Fehlers in einem Um- bzw. Stromrichter der defekte Umrichter schnell durch einen Überbrückungsschalter überbrückt werden, wobei auf eine in Reihe geschaltete Diode im Strompfad verzichtet werden kann. Bei Hochsetzstellern verhindert nämlich diese Diode einen von der Transformatorwicklung gespeisten Rückstrom in den überbrückenden Schalter. Vor dem Schalten der Überbrückung muss AC-Schütz geöffnet werden, um den Rückstrom zu verhindern.

Diese Schaltungsanordnung ist für Solar- bzw. Photovoltaikanlagen sehr geeignet. Im Leerlauf, z. B. morgens nach Sonnenaufgang, weist der Solargenerator eine hohe Ausgangsspannung auf. Die Leerlaufspannung ist in der Regel mehr als 20% höher als im Arbeitspunkt bei Einspeisung, d. h. 20% höher als eine MPP-Spannung (maximum power point). Die höhere Generatorspannung im Leerlauf führt durch die Erfindung nicht zur Schädigung der Elektronik im Anlauf. Die Anordnung ermöglicht, dass die Solarspannung höher sein kann als die zulässige Gesamtspannung der Stromrichteranordnung.

Bei großen Solaranlagen werden außerdem durch die Reihenschaltung der Verdrahtungsaufwand auf der DC-Seite und damit die Kosten reduziert.

Die Erfindung beruht auf der Erkenntnis, dass die Redundanz im Fehlerfall mit den Überbrückungsschaltern verbessert werden kann.

Bei Ausfall eines Stromrichters wird außerdem der betreffende Stromrichter weniger verlustbehaftet überbrückt.

Weitere vorteilhafte Ausgestaltungen der Erfindung sind in den Unteransprüchen gekennzeichnet.

Grundsätzlich ist die erfindungsgemäße Schaltungsanordnung für beliebige DC-Spannungsquellen mit hoher Leerlaufspannung bzw. hoher Spannung im Anlauf vorteilhaft. Ideal ist jedoch eine Ausführung für einen Photovoltaikgenerator oder eine Anzahl von Photovoltaikgeneratoren, bei der ein oder mehrere Überbrückungsschalter in Abhängigkeit der Photovoltaikspannung zu- und abschaltbar sind, so dass die Anzahl der aktiven Stromrichter veränderbar ist. Dadurch, dass weniger Schalter der Stromrichter-Reihenschaltungsanordnung bei niedriger Spannung, zum Beispiel bei geringer Sonneneinstrahlung, aktiv sind, verringern sich die Verluste.

Wenn die Anlage unterhalb der MPP-Spannung betrieben wird (Redundanzfall, ein Stromrichter ist überbrückt), steigt der Strom um bis zu 15 % an. Für diesen Fall muss eine Stromreserve (Leistungsreserve) vorgesehen werden.

In einer vorteilhaften Weiterbildung des erfindungsgemäßen Stromrichters ist vorgesehen, dass jeder Überbrückungsschalter ein steuerbarer elektromechanischer Schalter, z. B. ein Schütz, ist. Dadurch ist eine weitere Verbesserung des Wirkungsgrades möglich. Ein Schaltkontakt hat weniger Verluste als ein Halbleiterschalter. Diese Maßnahme wird erst dadurch möglich, dass kein Hochsetzsteller mit einem getakteten Halbleiterschalter vorhanden ist. Dadurch, dass keine Taktung vorliegt, kann ein langsamer mechanischer Schalter verwendet werden.

Bei einer weiteren vorteilhaften Ausführung der Erfindung ist der Überbrückungsschalter derart steuerbar, dass in einem Fehlerfall eines Stromrichters dieser durch den Schalter überbrückt wird. Die Überbrückungsschalter schaffen also zwei Funktionen. Eine erste Funktion ist eine Anlaufsteuerung und eine zweite Funktion ist, dass eine Redundanz bei Ausfall eines Stromrichters vorhanden ist. Eine dritte Funktion kann eine Anpassung an eine sich verändernde Sonneneinstrahlung sein.

Durch einen Dreiphasen-Mittelspannungstrafo mit mehreren Primärwicklungen, insbesondere Unterspannungswicklungen, ist einerseits eine galvanische Trennung und andererseits eine Deaktivierung einzelner Stromrichter möglich.

Es ist möglich, dass LC-Filter angeschlossen werden können, so dass der Transformator nicht mit hohen du/dt-Werten beim Schalten des Stromrichters belastet wird. Die Filter ermöglichen ein Sinussignal praktisch ohne Oberwellen.

Einzelne, z. B. defekte, Stromrichter können im Fehlerfall abgekoppelt werden, wenn zwischen jedem Ausgang der Stromrichter und dem Netz, insbesondere zwischen einem Netzfilter, ein steuerbarer elektromechanischer Schalter, z.B. ein AC-Schütz, vorhanden ist. Ist das Schütz offen, werden nach erfolgter Herstellung der Synchronität die Schalter geschlossen, ohne dass Ausgleichsströme fließen.. Grundsätzlich können auch diese Schalter auch andere Aufgaben übernehmen, zum Beispiel eine Abtrennung bei Überstrom, im Kurzschlussfall oder einem anderen Fehler. Alternativ kann diese Abtrennung auch ein DC-Schalter zwischen Generator und Stromrichter übernehmen.

Ein Ausführungsbeispiel wird anhand der Zeichnungen näher erläutert, wobei weitere vorteilhafte Weiterbildungen der Erfindung und Vorteile derselben beschrieben sind.

Es zeigen:
- Fig. 1: eine erfindungsgemäße Stromrichterschaltungsanordnung,
- Fig. 2: eine Teilschaltung einer Stromrichterschaltungsanordnung nach dem Stand der Technik.

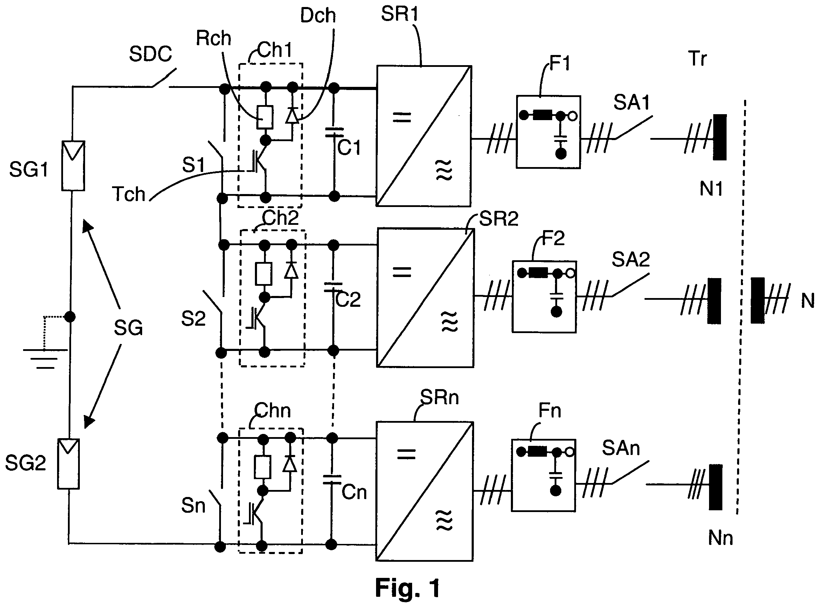

Fig. 1 zeigt eine bevorzugte Ausführungsform der erfindungsgemäßen Stromrichterschaltungsanordnung für eine Solaranlage zur Einspeisung in ein Energieversorgungsnetz N. Sie umfasst mehrere Stromrichter SR1 bis SRn, die einem Solar- bzw. Photovoltaikgenerator SG in Reihe nachgeschaltet sind. Durch die Reihenschaltung mehrerer Stromrichter SR1 bis SRn sinkt der Verdrahtungsaufwand auf der DC-Seite.

Der Generator SG besteht aus zwei in Reihe geschalteten Photovoltaikgruppen SG1, SG2, die an ihrem Verknüpfungspunkt geerdet sind, so dass eine positive, eine negative und eine null Volt Spannung, also eine bipolare Spannung bzw. Mittelpunkterdung vorhanden ist. Jede Photovoltaikgruppe SG1, SG2 kann aus mehreren parallel und/oder in Reihe geschalteten Solarzellen oder Modulen bestehen, um eine erforderliche Spannung bzw. Leistung zu liefern. Alternativ kann eine einzige Modulgruppe mit Erdung am Pluspol, Minuspol oder ohne Erdung vorhanden sein.

Ebenfalls in Reihe sind mehrere dem Stromrichter SR1 - SRn zugeordneten DC-Schütze S1 bis Sn parallel geschaltet. Parallel zu jedem Schütz S1 bis Sn befindet sich ein Chopper Ch1 bis Chn. Parallel zu jedem Chopper Ch1 bis Chn ist ein Zwischenkreis-Kondensator C1 bis Cn geschaltet. Jedem Kondensator C1 bis Cn folgt der Stromrichter SR1 bis SRn. Die Stromrichter SR1 bis SRn haben eine dreiphasige Ausgangsspannung. Die Stromrichter SR1 bis SRn werden an mehreren Unterspannungswicklungen eines Dreiphasen-Mittelspannungstrafos Tr betrieben.

Zwischen jedem Stromrichter SR1 bis SRn ist ein Filter, insbesondere ein LC-Filter F1 bis F3 (Fn), geschaltet sowie jeweils ein AC-Schütz SA1 bis SAn. Zwischen dem Photovoltaikgenerator SG und der Reihenschaltung aus den Schützen S1 bis Sn ist ein weiteres DC-Schütz SDC geschaltet, der den Generator von der Stromrichterschaltung trennen kann.

Jeder Chopper ist als Widerstands-Chopper Ch1 - Chn ausgeführt und besteht vorzugsweise aus drei Bauelementen, und zwar einem Widerstand R_{ch}, einem Halbleiterschalter T_{ch} und einer Diode D_{ch}. Der Halbleiterschalter T_{ch} wird im Chopperbetrieb getaktet, so dass ein veränderlicher Widerstandsstrom möglich ist. Der Widerstand und der Halbleiterschalter sind in Reihe geschaltet. Parallel zum Widerstand ist die Diode D_{ch} angeordnet, und zwar antiparallel. Das heißt, sie ist entgegengesetzt zum Halbleiterschalter T_{ch} gerichtet. Die Diode D_{ch} erfüllt die Funktion einer Freilaufdiode.

Jeder Stromrichter umfasst eine dreiphasige Brückenschaltung aus Halbleiterschaltern, die den Gleichstrom in eine Wechselstrom schalten. Die Widerstands-Chopper Ch1 - Chn haben auch die Aufgabe, eine optimale Halbleiterausnutzung in den Stromrichtern zu erreichen bzw. deren Schädigung zu vermeiden. Jeder Chopper Ch1 - Chn belastet den Generator SG bzw. das Solarfeld, bevor die Anlage über den oder die Dreiphasen-Stromrichter SR1 - SRn Energie in das Netz N einspeisen.

Die Stromrichter Ch1 - Chn nehmen ihren Betrieb erst auf, wenn die Photovoltaikspannung durch die Chopperbelastung einen Wert kleiner der Leerlaufspannung des Generators SG angenommen hat.

Bei mehreren Umrichtern in Reihe können diese Widerstands-Chopper Ch1 - Chn gleichzeitig genutzt werden, um beim Ausfall eines der mehreren Dreiphasen-Stromrichter SR1 - SRn, die Anlage wieder in einen sicheren Zustand zu bringen.

Mit Hilfe eines der Schütze S1 - Sn kann ein defekter Dreiphasen-Stromrichter SR1 - SRn kurzgeschlossen werden, um die Anlage mit n-1 Stromrichtern weiter betreiben zu können. Dadurch erhöht sich die Redundanz der Anlage.

Jeder Chopper Ch1 - Chn und jeder Stromrichter ist auf insbesondere etwa den 1,2-fachen Nennstrom ausgelegt, so dass die Solaranlage bei Ausfall eines Stromrichters SR1 - SRn mit einer geringeren Spannung als eine MPP-Spannung betrieben werden kann.

Die Stromrichter SR1 - SR2 sind ausgangsseitig mit einem Transformator Tr verbunden. Dieser hat eine Anzahl von Primärwicklungen N1 - Nn entsprechend der Anzahl der Stromrichter, wobei jeder Stromrichter SR1 - SRn jeweils an eine Primärwicklung N1 - Nn angeschlossen ist. Die Spannung an der Sekundärwicklung N2 des Transformators Tr ist höher als die Eingangsspannung, die im Mittelspannungsbereich also über 1 kV liegt. Die Ausgangsspannung kann z.B. 10 kV - 35kV/50 Hz betragen. Die Eingangsspannung des Transformators kann insgesamt z.B. max. 300 bis 400 V sein.

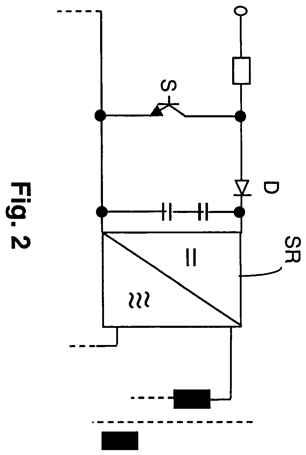

Fig. 2 zeigt zum Vergleich eine Schaltung nach dem eingangs beschriebenen Stand der Technik für eine Windkraftanlage. In jeder Stromrichterschaltung SR ist eine im Strompfad liegende Diode D vorhanden, die Verluste verursacht. Diese verlustbehaftete Eingangs- bzw. Reihen-Diode D ist nach der Erfindung nicht vorhanden.

Eine Steuerung eines Anlaufs der Schaltung läuft vorzugsweise wie folgt ab:
Zuerst werden die DC-Schütze S1 - Sn und die AC-Schütze geöffnet. Jeder Chopper Ch1 - Chn wird getaktet bis die Spannungen an Zwischenkreiskondensatoren C1 - Cn klein genug sind. Jeder Stromrichter wird in Betrieb genommen, wobei ein Arbeitspunkt eingestellt wird. Anschließend erfolgt eine Synchronisation der Stromrichter mit Netzfrequenz 50/60Hz. Dann werden alle AC-Schütze SA1 - SAn eingeschaltet. Jeder Chopper Ch1 - Chn wird dann deaktiviert und nicht mehr getaktet.

Eine Steuerung eines Stromrichterfehlers läuft wie folgt ab:
Zunächst wird feststellt, z.B. mit einer angeschlossenen Messeinrichtung, ob ein Stromrichter SR1 - SRn ausgefallen ist. Dann wird die Gesamtanlage abgeschaltet, indem die Stromrichter SR1 - SRn nicht mehr angesteuert werden und das Schütz SDC wird geöffnet. Die Chopper Ch1 bis Chn werden getaktet, um die Kondensatoren C1 bis Cn zu entladen. Wenn der Stromrichter SRk ausgefallen ist, wird das zugehörige Schütz Sk geschlossen. Das Schütz SDC wird geschlossen. Die Kondensatoren C1 bis Cn (nicht aber Ck) laden sich auf. Die Chopper C1 bis Cn nicht aber Ck werden angesteuert und halten die Kondensatorspannung unterhalb eines Maximalwertes. Die Stromrichter SR1 bis SRn (nicht SRk) werden angesteuert und synchronisieren sich auf das Netz. Die Schütze SA1 bis SAn (nicht aber SAk) werden geschlossen. Der DC-Strom wird so eingestellt, dass an keinem Stromrichter eine zu hohe DC-Spannung anliegt. Dieser Strom kann etwas höher als der Nenn-DC-Strom sein, weil die Anlage eventuell nicht im MPP arbeitet. Die Chopper takten nicht mehr.

## Patentansprüche

1. Stromrichterschaltungsanordnung für die Umwandlung einer von einem Generator (SG) mit variierender Ausgangsleistung erzeugten DC-Spannung im Mittelspannungsbereich in eine Wechselspannung zur Einspeisung in ein Energieversorgungsnetz (N), mit mehreren in Reihe geschalteten Stromrichtern (SR1-SRn), die dem Generator (SG) parallel geschaltet sind, sowie einen steuerbaren Überbrückungsschalter (S1-Sn) für jeden Stromrichter (SR1-SRn), wobei der Überbrückungsschalter (S1-Sn) in einem Gleichspannungszwischenkreis liegt und den jeweiligen Stromrichter (SR1-SRn) in geschlossenem Zustand überbrückt,
**dadurch gekennzeichnet,**
**dass** zwischen jedem Stromrichter (SR1-SRn) und dem Generator (SG) ein Widerstands-Chopper (Ch1-Chn) geschaltet ist, wobei keine Eingangsdiode im Strompfad vom Generator (SG) zum Stromrichter (SR1-SRn) vorhanden ist, sowie jeder Überbrückungsschalter (S1-Sn) parallel zum Widerstands-Chopper (Ch1-Chn) im Gleichspannungszwischenkreis angeschlossen ist, und dass die Stromrichterschaltungsanordnung derart ausgeführt ist, dass sie für einen Photovoltaikgenerator (SG) oder eine Anzahl von Photovoltaikgeneratoren geeignet ist, bei der ein oder mehrere Überbrückungsschalter (S1-Sn) in Abhängigkeit der Photovoltaikspannung zu- und abschaltbar sind, so dass die Anzahl der aktiven Stromrichter veränderbar ist.

2. Stromrichterschaltungsanordnung nach Anspruch 1,
**dadurch gekennzeichnet,**
**dass** jeder Widerstands-Chopper (Ch1-Chn) und jeder Stromrichter (SR1-SRn) auf den 1,05-1,2-fachen, insbesondere etwa den 1,1-fachen Nennstrom ausgelegt ist.

3. Stromrichterschaltungsanordnung nach einem der vorhergehenden Ansprüche, **dadurch gekennzeichnet, dass** zwischen jedem Stromrichter (SR1-SRn) und dem Generator (SG) kein Hochsetzsteller vorhanden ist.

4. Stromrichterschaltungsanordnung nach einem der vorhergehenden Ansprüche,
**dadurch gekennzeichnet,**
**dass** jeder Überbrückungsschalter (S1-Sn) ein steuerbarer elektromechanischer Schalter ist.

5. Stromrichterschaltungsanordnung nach einem der vorhergehenden Ansprüche,
**dadurch gekennzeichnet,**
**dass** jeder Überbrückungsschalter (S1-Sn) ein DC-Schütz ist.

6. Stromrichterschaltungsanordnung nach einem der vorhergehenden Ansprüche,
**dadurch gekennzeichnet,**
**dass** der Überbrückungsschalter (S1-Sn) derart steuerbar ist, dass in einem Fehlerfall eines Stromrichters dieser durch den Schalter überbrückt wird.

7. Stromrichterschaltungsanordnung nach einem der vorhergehenden Ansprüche,
**dadurch gekennzeichnet,**
**dass** zwischen den Stromrichtern (SR1-SRn) und dem Netz ein Transformator (Tr) mit einer Anzahl von Primärwicklungen entsprechend der Anzahl der Stromrichter vorhanden ist, wobei jeder Stromrichter an eine Primärwicklung (N1-Nn) angeschlossen ist bzw. eine entsprechende Anzahl von Einzeltransformatoren.

8. Stromrichterschaltungsanordnung nach einem der vorhergehenden Ansprüche,
**dadurch gekennzeichnet,**
**dass** am Ausgang jeden Stromrichters (SR1-SRn) ein Netzfilter, insbesondere ein LC-Filter (F1-Fn) angeschlossen ist.

9. Stromrichterschaltungsanordnung nach einem der vorhergehenden Ansprüche,
**dadurch gekennzeichnet,**
**dass** jeder Widerstands-Chopper (Ch1-Chn) aus einem steuerbaren Halbleiterschalter (Tch), einem dazu in Reihe geschalteten Widerstand (Rch) und einer zum Widerstand (Rch) antiparallelen Diode (Dch) besteht.

10. Stromrichterschaltungsanordnung nach einem der vorhergehenden Ansprüche,
**dadurch gekennzeichnet,**
**dass** zwischen jedem Ausgang der Stromrichter und dem Netz, insbesondere zwischen einem Netzfilter, ein steuerbarer elektromechanischer Schalter (SA1-SAn) vorhanden ist.

11. Stromrichterschaltungsanordnung nach Anspruch 10,
**dadurch gekennzeichnet,**
**dass** jeder am Ausgang des Stromrichters angeordnete Schalter (SA1-SAn) ein AC-Schütz ist.

12. Verfahren zur Anlaufsteuerung einer Stromrichterschaltungsanordnung nach einem der vorhergehenden Ansprüche,
**gekennzeichnet durch** die Schritte:
- Öffnen der Überbrückungsschalter (S1- Sn),
- vorzugsweise auch Öffnen von AC-Schützen (SA1-SAn),
- Takten der Widerstands-Chopper (Ch1-Chn) bis die Spannungen an Zwischenkreiskondensatoren (C1 bis Cn) einen festgelegten Wert unterschreiten,
- Betrieb der in Reihe geschalteten Stromrichter (SR1-SRn) sowie Einstellung eines Arbeitspunktes,
- Synchronisation der in Reihe geschalteten Stromrichter (SR1-SRn),
- vorzugsweise Einschalten der AC-Schütze (SA1-SAn),
- Widerstands-Chopper (Ch1-Chn) werden dektiviert und nicht mehr getaktet.

13. Verfahren zur Fehlersteuerung einer Stromrichterschaltungsanordnung nach einem der Ansprüche 1 bis 11,
**gekennzeichnet durch** die Schritte:
- Feststellen eines Ausfalls eines Stromrichters (SRk) der in Reihe geschalteten Stromrichter (SR1-SRn),
- Abschalten einer Gesamtanlage, indem die in Reihe geschalteten Stromrichter (SR1-SRn) nicht mehr angesteuert werden und eine DC- und/oder AC-seitige Netztrennung erfolgt,
- ein Eingangs-Schütz (SDC) wird geöffnet;
- die Widerstands-Chopper (Ch1 bis Chn) werden getaktet, um Zwischenkreiskondensatoren (C1 bis Cn) zu entladen;
- wenn der Stromrichter (SRk) ausgefallen ist, wird ein zugehöriger Schütz (Sk) geschlossen;
- das Eingangs-Schütz (SDC) wird geschlossen; die Zwischenkreiskondensatoren (C1 bis Cn) laden sich auf;
- die Widerstands-Chopper (Ch1 bis Chn) werden angesteuert, wobei der Widerstands-Chopper (Ck) des ausgefallenen Stromrichters (Ck) nicht angesteuert wird, und halten die Kondensatorspannung unterhalb eines Maximalwertes;
- die in Reihe geschalteten Stromrichter (SR1 bis SRn) werden angesteuert, wobei der ausgefallene Stromrichter (SRk) nicht angesteuert wird, und synchronisieren sich auf das Netz;
- die Ausgangs-Schütze (SA1 bis SAn) mit Ausnahme des Ausgangs-Schützes (SAk) des ausgefallenen Stromrichters werden geschlossen;
- der DC-Strom wird so eingestellt, dass an einem Stromrichter eine zu hohe DC-Spannung anliegt;
- die Widerstands-Chopper takten nicht mehr.

## Claims

1. An inverter circuit arrangement for converting a DC voltage in the medium voltage range generated by a generator (SG) with varying output power into an AC voltage for feeding into a power supply network (N), having a plurality of series-connected current inverters (SR1-SRn) being connected in parallel to the generator (SG), and a controllable bridging switch (S1-Sn) for each inverter (SR1-SRn), the bridging switch (S1-Sn) being located in a DC voltage intermediate circuit and bridging the respective inverter (SR1-SRn) in a closed state, **characterized in that** a resistor chopper (Ch1-Chn) is connected between each inverter (SR1-SRn) and the generator (SG), no input diode being present in the current path from the generator (SG) to the inverter (SR1-SRn), and each bridging switch (S1-Sn) is connected in parallel with the resistance chopper (Ch1-Chn) in the DC voltage intermediate circuit, and **in that** the inverter circuit arrangement is configured such that it is suitable for a photovoltaic generator or a number of photovoltaic generators in which one or more bridging switches (S1-Sn) can be switched on and off depending on the photovoltaic voltage, so that the number of active inverters can be modified.

2. The inverter circuit arrangement according to claim 1, **characterized in that** each resistance chopper (Ch1-Chn) and each inverter (SR1-SRn) is designed for 1.05-1.2 times, in particular approximately 1.1 times, the rated current.

3. The inverter circuit arrangement according to any one of the preceding claims, **characterized in that** no step-up converter is present between each inverter (SR1-SRn) and the generator (SG).

4. The inverter circuit arrangement according to any one of the preceding claims, **characterized in that** each bridging switch (S1-Sn) is a controllable electromechanical switch.

5. The inverter circuit arrangement according to any one of the preceding claims, **characterized in that** each bridging switch (S1-Sn) is a DC contactor.

6. The inverter circuit arrangement according to any one of the preceding claims, **characterized in that** the bridging switch (S1-Sn) is controllable in such a manner that, in the event of a fault, the respective current inverter is bridged by the switch.

7. The inverter circuit arrangement according to any one of the preceding claims, **characterized in that** a transformer (Tr) with a number of primary windings corresponding to the number of inverters or a corresponding number of individual transformers is provided between the inverters (SR1-SRn) and the grid, each inverter being connected to a primary winding (N1-Nn).

8. The inverter circuit arrangement according to any one of the preceding claims, **characterized in that** a line filter, in particular an LC filter (F1-Fn), is connected to the output of each inverter (SR1-SRn).

9. The inverter circuit arrangement according to any one of the preceding claims, **characterized in that** each resistor chopper (Ch1-Chn) consists of a controllable semiconductor switch (Tch), a resistor (Rch) connected in series thereto, and a diode (Dch) antiparallel to the resistor (Rch).

10. The inverter circuit arrangement according to any one of the preceding claims, **characterized in that** a controllable electromechanical switch (SA1-SAn) is provided between each output of the inverters and the grid, in particular between a line filter.

11. The inverter circuit arrangement according to Claim 10, **characterized in that** each switch (SA1-SAn) arranged at the output of the converter is an AC contactor.

12. Method of start-up control of an inverter circuit arrangement according to any one of the preceding claims, **characterized by** the steps of:
- opening the bridging switches (S1-Sn),
- preferably also opening of AC contactors (SA1-SAn),
- clocking the resistor choppers (Ch1-Chn) (SR1-SRn) until voltages of DC link capacitors (C1-Cn) drop below a predetermined value,
- operating the inverters (SR1-SRn) connected in series, and adjusting an operation point,
- synchronization of the inverters (SR1-SRn) connected in series,
- preferably switching on the AC contactors (SA1-SAn),
- resistor choppers (Ch1-Chn) are deactivated and are no longer clocked.

13. Method of fault control of an inverter circuit arrangement according to any one of the preceding claims, **characterized by** the steps of:
- detecting a failure of one of the inverters (SR1-SRn) connected in series,
- switching off a total system by no longer controlling the inverters (SR1-SRn) connected in series, and disconnecting from the grid on the DC-side and/or AC-side,
- an input contactor (SDC) is opened,
- the resistor choppers (Ch1 to Chn) are clocked to discharge DC link capacitors (C1 to Cn),
- if the inverter (SRk) has failed, an associated contactor (Sk) is closed,
- the contactor (SDC) is closed, and the DC link capacitors (C1 to Cn) are charged,
- the resistor choppers (Ch1 to Chn) are controlled with the resistor chopper (Ck) of the failed inverter (Ck) not being controlled, and
- holding the capacitor voltage below a maximum value,
- the inverters (SR1 to SRn) connected in series are controlled with the failed inverter (SRk) not being controlled, and synchronize to the grid,
- the output contactors (SA1 to SAn) with the exception the contactor (SAk) of the failed inverter are closed,
- the DC current is adjusted such that a DC overvoltage is applied to one of the inverters,
- the resistor choppers (SR1-SRn) are not clocked anymore.

## Revendications

1. Arrangement de circuit convertisseur de courant pour la conversion d'une tension continue générée par un générateur (SG) à puissance de sortie variable dans une plage de moyennes tensions en une tension alternative destinée à être injectée dans un réseau de distribution d'énergie (N), comprenant plusieurs convertisseurs de courants (SR1 - SRn) branchés en série, lesquels sont branchés en parallèle avec le générateur (SG), ainsi qu'un commutateur de pontage (S1 - Sn) pour chaque convertisseur de courant (SR1 - SRn), le commutateur de pontage (S1 - Sn) se trouvant dans un circuit intermédiaire à tension continue et pontant le convertisseur de courant (SR1 - SRn) correspondant dans l'état fermé,
**caractérisé en ce que**
un hacheur à résistance (Ch1 - Chn) est branché entre chaque convertisseur de courant (SR1 - SRn) et le générateur (SG), aucune diode d'entrée n'étant présente dans le trajet de courant du générateur (SG) au convertisseur de courant (SR1 - SRn), et chaque commutateur de pontage (S1 - Sn) étant branché en parallèle avec le hacheur à résistance (Ch1 - Chn) dans le circuit intermédiaire à tension continue,
et **en ce que** l'arrangement de circuit convertisseur de courant est réalisé de telle sorte qu'il convient pour un générateur photovoltaïque (SG) ou un certain nombre de générateurs photovoltaïques avec lesquels un ou plusieurs commutateurs de pontage (S1 - Sn) peuvent être mis en circuit ou hors circuit en fonction de la tension photovoltaïque, de sorte que le nombre de convertisseurs de courants actifs est modifiable.

2. Arrangement de circuit convertisseur de courant selon la revendication 1, **caractérisé en ce que** chaque hacheur à résistance (Ch1 - Chn) et chaque convertisseur de courant (SR1 - SRn) est conçu pour 1,05 à 1,2 fois, notamment environ 1,1 fois le courant nominal.

3. Arrangement de circuit convertisseur de courant selon l'une des revendications précédentes, **caractérisé en ce qu'**aucun convertisseur élévateur n'est présent entre chaque convertisseur de courant (SR1 - SRn) et le générateur (SG).

4. Arrangement de circuit convertisseur de courant selon l'une des revendications précédentes, **caractérisé en ce que** chaque commutateur de pontage (S1 - Sn) est un commutateur électromécanique commandable.

5. Arrangement de circuit convertisseur de courant selon l'une des revendications précédentes, **caractérisé en ce que** chaque commutateur de pontage (S1 - Sn) est un contacteur à CC.

6. Arrangement de circuit convertisseur de courant selon l'une des revendications précédentes, **caractérisé en ce que** le commutateur de pontage (S1 - Sn) peut être commandé de telle sorte qu'en cas de défaut d'un convertisseur de courant, celui-ci est ponté par le commutateur.

7. Arrangement de circuit convertisseur de courant selon l'une des revendications précédentes, **caractérisé en ce qu'**un transformateur (Tr) ayant un nombre d'enroulements primaires correspondant au nombre de convertisseurs de courants est présent entre les convertisseurs de courants (SR1 - SRn) et le réseau, chaque convertisseur de courant étant raccordé à un enroulement primaire (N1 - Nn) ou à un nombre correspondant de transformateurs individuels.

8. Arrangement de circuit convertisseur de courant selon l'une des revendications précédentes, **caractérisé en ce qu'**un filtre d'alimentation, notamment un filtre LC (F1 - Fn) est raccordé à la sortie de chaque convertisseur de courant (SR1 - SRn).

9. Arrangement de circuit convertisseur de courant selon l'une des revendications précédentes, **caractérisé en ce que** chaque hacheur à résistance (Ch1 - Chn) se compose d'un commutateur semiconducteur commandable (Tch), d'une résistance (R_{ch}) branchée en série avec celui-ci et d'une diode (D_{ch}) montée en tête-bêche avec la résistance (R_{ch}).

10. Arrangement de circuit convertisseur de courant selon l'une des revendications précédentes, **caractérisé en ce qu'**un commutateur électromécanique commandable (SA1 - SAn) est présent entre chaque sortie du convertisseur de courant et le réseau, notamment entre un filtre d'alimentation.

11. Arrangement de circuit convertisseur de courant selon la revendication 10, **caractérisé en ce que** chaque commutateur (SA1 - SAn) disposé à la sortie du convertisseur de courant est un contacteur à CA.

12. Procédé de commande du démarrage d'un arrangement de circuit convertisseur de courant selon l'une des revendications précédentes,
**caractérisé par** les étapes suivantes :
- ouverture des commutateurs de pontage (S1 - Sn),
- de préférence ouverture également des contacteurs à CA (SA1 - SAn),
- cadencement des hacheurs à résistance (Ch1 - Chn) jusqu'à ce que les tensions aux bornes des condensateurs de circuit intermédiaire (C1 à Cn) deviennent inférieures à une valeur donnée,
- mise en fonctionnement des convertisseurs de courants (SR1 - SRn) branchés en série et réglage d'un point de fonctionnement,
- synchronisation des convertisseurs de courants (SR1 - SRn) branchés en série,
- de préférence mise en circuit des contacteurs à CA (SA1 - SAn),
- désactivation et cessation du cadencement des hacheurs à résistance (Ch1 - Chn).

13. Procédé de traitement des erreurs d'un arrangement de circuit convertisseur de courant selon l'une des revendications 1 à 11,
**caractérisé par** les étapes suivantes :
- constatation d'une panne d'un convertisseur de courant (SRk) des convertisseurs de courants (SR1 - SRn) branchés en série,
- mise hors circuit d'un équipement complet en ce que les convertisseurs de courants (SR1 - SRn) branchés en série ne sont plus excités et une déconnexion du réseau côté CC et/ou côté CA a lieu,
- ouverture d'un contacteur d'entrée (SDC),
- cadencement des hacheurs à résistance (Ch1 - Chn) pour décharger les condensateurs de circuit intermédiaire (C1 - Cn),
- lorsque le convertisseur de courant (SRk) est en panne, fermeture d'un contacteur (Sk) associé,
- fermeture du contacteur d'entrée (SDC), les condensateurs de circuit intermédiaire (C1 à Cn) se chargent,
- excitation des hacheurs à résistance (Ch1 à Chn), le hacheur à résistance (Ck) du convertisseur de courant (SRk) en panne n'étant pas excité, et
maintien de la tension de condensateur au-dessous d'une valeur maximale,
- excitation des convertisseurs de courants (SR1 à SRn) branchés en série, le convertisseur de courant (SRk) en panne n'étant pas excité, et synchronisation de ceux-ci sur le réseau,
- fermeture des contacteurs de sortie (SA1 à SAn), à l'exception du contacteur de sortie (SAk) du convertisseur de courant en panne,
- réglage du courant continu de telle sorte qu'une tension continue trop élevée est présente sur un convertisseur de courant,
- arrêt du cadencement des hacheurs à résistance.
